Europäisches Patentamt

European Patent Office

Office européen des brevets

(11) Veröffentlichungsnummer: **0 199 107 B1**

(12) **EUROPÄISCHE PATENTSCHRIFT**

(45) Veröffentlichungstag der Patentschrift: **15.01.92**

(21) Anmeldenummer: **86103884.2**

(22) Anmeldetag: **21.03.86**

(51) Int. Cl.⁵: **G01S 7/28**, G01S 13/44, G01S 13/94

(54) **Verfahren und Anordnung zur Unterdrückung von Regenechos bei einem Geländefolgeradar.**

(30) Priorität: **23.03.85 DE 3510576**

(43) Veröffentlichungstag der Anmeldung:
**29.10.86 Patentblatt 86/44**

(45) Bekanntmachung des Hinweises auf die
Patenterteilung:
**15.01.92 Patentblatt 92/03**

(84) Benannte Vertragsstaaten:
**DE GB IT**

(56) Entgegenhaltungen:
**US-A- 3 795 909**

**PROCEEDINGS OF THE IEEE 1979 NATIONAL AEROSPACE AND ELECTRONICS CONFE-RENCE, NAECON 1979, Dayton Convention Center, 15.-17. Mai 1979, Seiten 1089-1096, IEEE, New York, US; A.C. WOODWARD et al.: "Terrain-following radar: key to low-altitude flight"**

(73) Patentinhaber: **TELEFUNKEN SYSTEMTECHNIK GMBH**
**Sedanstrasse 10**
**W-7900 Ulm (Donau)(DE)**

(72) Erfinder: **König, Martin, Dr.**
**Zankerstrasse 43**
**W-8871 Günzburg(DE)**
Erfinder: **Lesiow, Rudolf, Dipl.-Ing.**
**Frauenstrasse 85**
**W-7900 Ulm(DE)**
Erfinder: **Robinson, David**
**Eberhardtstrasse 70**
**W-7900 Ulm(DE)**
Erfinder: **Wölfle, Erwin, Dr.**
**Römerstrasse 19**
**W-7930 Ehingen(DE)**

(74) Vertreter: **Schulze, Harald Rudolf, Dipl.-Ing. et al**
**TELEFUNKEN SYSTEMTECHNIK GMBH Sedanstrasse 10**
**W-7900 Ulm(DE)**

**Beschreibung**

Die Erfindung betrifft ein Verfahren zur Unterdrückung von Regenechos bei einem Geländefolgeradar der im Oberbegriff des Patentanspruchs 1 angegebenen Art sowie eine Anordnung zur Durchführung eines solchen Verfahrens.

Die Unterdrückung von Nebenzipfelechos mittels eines Guard-Kanals und die Beschränkung auf Richtungen oberhalb der Antennenachsenrichtung (Boresight) durch Phasenvergleich von Summe- und Differenzsignal eines Elevations-Monopuls-Radars sind allgemeiner Stand der Technik und z.B. aus der US-A-3 795 909 bekannt. Dort wird ein Geländefolgeradar-System beschrieben, das aus dem Summen- und Differenzsignal des Monopuls-Radarempfängers ein Boresight-(Tor-)Signal bildet, welches den Zeitraum zur Auswertung des Summen- und Differenzsignals bestimmt. Es wird auf ein Ziel erkannt, wenn während dieses Boresight-(Tor-)Signales das Summensignal größer als eine Schwelle und größer als das Differenzsignal ist, das kleiner als eine zugehörige Schwelle sein muß. Ziele, insbesondere Türme, und Clutter sind aufgrund unterschiedlich breiter Signale unterscheidbar.

Ein Geländefolgeradar-Processor ersetzt das übliche Monopulsverfahren durch den sogenannten MRI-Algorithmus. Dieser Algorithmus hat zur Folge, daß die Radarechos vom Boden zwar über die gesamte azimutale Keulenbreite, nicht aber über die gesamte Elevationskeule aufsummiert werden, sondern in der Elevation nur aus einem kleinen Winkelbereich in der Nähe der boresight-Achse verarbeitet werden.

Regenechos können ebenfalls häufig die Amplitudenschwelle überschreiten und ein Bodenecho vortäuschen, so daß die Geländefolgesteuerung dem vermeintlichen Boden ausweichend ein falsches Manöver auslöst und das Flugzeug über alle Wolken steigt.

Bekannte Verfahren zur Regenechounterdrükkung basieren auf dem Einsatz zirkular polarisierter Wellen. Der selektive Empfang von Echos nur eines Polarisationssinns ist nur bei schwachem Regen anwendbar.

Ein weiterentwickeltes, bereits vorgeschlagenes Verfahren sieht daher den getrennten Empfang beider Polarisationen und die Erkennung von Regenclutter aus einem Amplitudenvergleich vor.

Nachteilig daran ist, daß dadurch ein zusätzlicher Empfangskanal notwendig wird.

Der Erfindung liegt die Aufgabe zugrunde, ein Verfahren der eingangs genannten Art, welches mit geringem Zusatzaufwand eine weitgehende Unterdrückung von Regenechos ermöglicht, sowie eine Anordnung zur Durchführung eines solchen Verfahrens anzugeben.

Das erfindungsgemäße Verfahren ist im Patentanspruch 1 beschrieben. Eine Anordnung zur Durchführung des erfindungsgemäßen Verfahrens ist dem Patentanspruch 4 zu entnehmen. Die Unteransprüche beinhalten vorteilhafte Ausgestaltungen und Weiterbildungen der Erfindung.

Die Erfindung zeichnet sich durch einen besonders geringen Zusatzaufwand zu bereits gebräuchlichen Geländefolgeradars aus, da nur eine Verstärkung des Signals durch Multiplikation oder gemäß einer bevorzugten Ausführungsform mit logarithmierten Signalen durch Addition eines vorgegebenen Pegels erforderlich ist.

Die Erfindung ist nachfolgend anhand der Abbildungen an einem Ausführungsbeispiel noch veranschaulicht. Dabei zeigt

FIG. 1
eine Flugsituation mit einem Geländefolgeradar
FIG. 2 bis FIG. 4
Pegelsituationen in den beiden Kanälen bei unterschiedlichen Verhältnissen einmal ohne (A) und einmal mit (B) der vorliegenden Erfindung
FIG. 5 und FIG. 6
erfindungsgemäße Anordnungen.

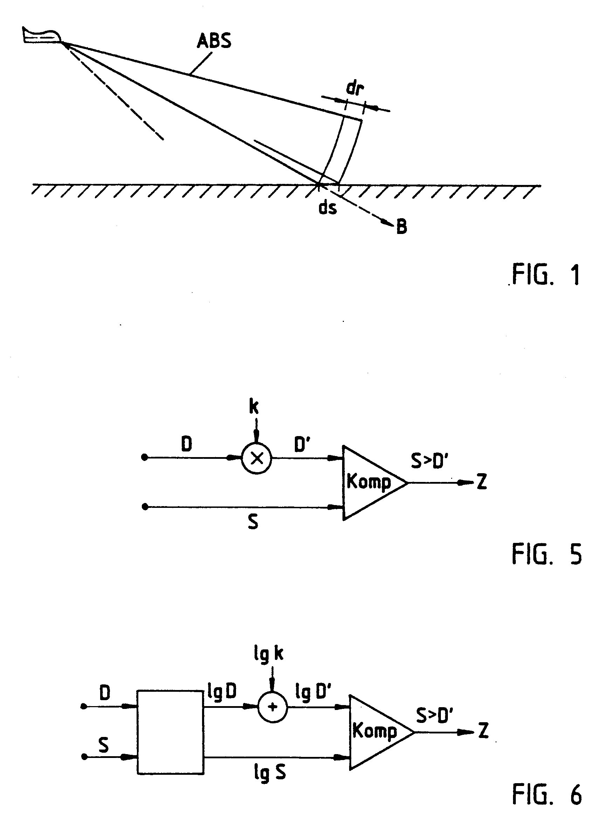

Von dem Bodenbereich, der von dem über Boresight (B) liegenden Teil des Antennendiagramms ABS erfaßt wird, wird für die Geländefolgesteuerung durch Beschränkung auf einen schmalen Entfernungsring dr und auf das antennennächste Echo nur das Bodenstück ds erfaßt, was für die Bodenechos einer starken Verengung des Antennenwinkels über Boresight entspricht. Bodenechos werden daher im Normalfall nur vom Summendiagramm $\Sigma$ (FIG. 2) erfaßt und treten im Differenzkanal nur mit sehr viel kleinerer Amplitude auf.

Ohne Regen (FIG. 2A) wird dann also im Summenkanal eine wesentlich höhere Amplitude S als im Differenzkanal D bzw. D' auftreten, sowohl für den Fall, daß k = 1 (FIG. 2A), also ohne die erfindungsgemäße zusätzliche Verstärkung, als auch bei Anwendung der Erfindung. Die Erfindung führt also in einer solchen ungestörten Umgebung zur unverändert zuverlässigen Bodenerkennung.

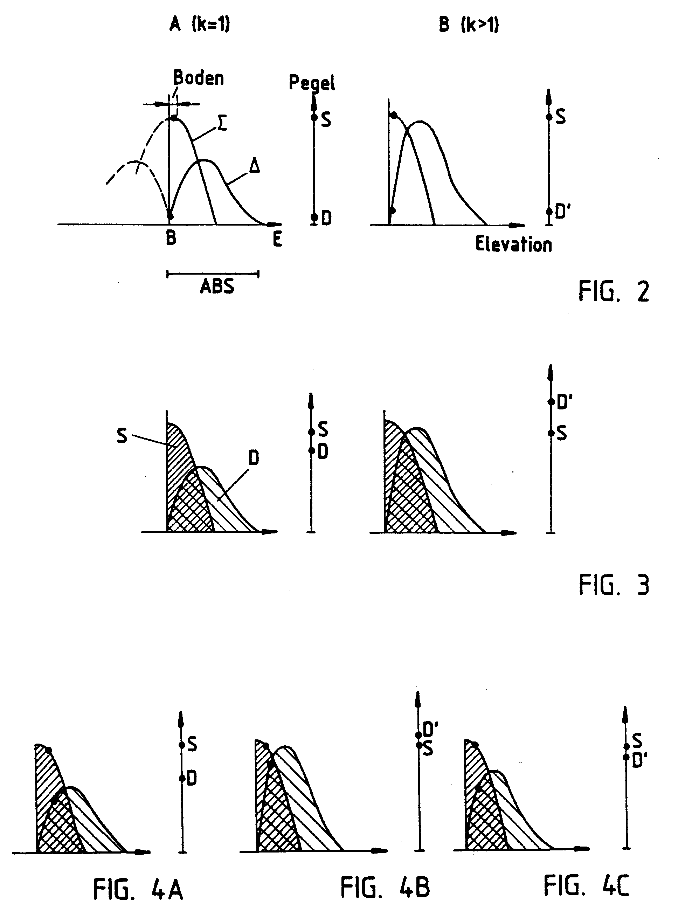

Die FIG. 3 zeigt die Pegelsituation bei Regen ohne Bodenechos. Die Signalamplituden in den Kanälen entsprechen der Integration über die gesamte Keulenbreite des Summen ($\Sigma$)- bzw. Differenzdiagramms ($\Delta$), da das Regengebiet ein Flächenziel, das sich über den geamten Winkelbereich der Diagramme erstreckt, darstellt. Die Amplitude S im Summenkanal übersteigt die Amplitudenschwelle und ist ohne die Erfindung größer als die Amplitude D im Differenzkanal (FIG. 3A). Ein Amplitudenvergleich ergibt in diesem Fall eine Zielmeldung, was in der Geländefolgesteuerung ein falsches Manöver auslöst.

Bei zusätzlicher erfindungsgemäßer Verstärkung um einen Faktor k wird die verstärkte Amplitude D' des Differenzkanals größer als die Amplitude S im Summenkanal, so daß nunmehr ein Amplitudenvergleich von S und D' zu einer Unterdrückung dieser Echos führt entsprechend einer Entscheidung auf Vorliegen von Regenclutter. Es erfolgt somit eine zuverlässige Unterdrückung reiner Regenechos.

Beim gleichzeitigen Vorliegen von Bodenechos und Regenechos ist zu unterscheiden zwischen stark bis durchschnittlich reflektierendem Boden und schwach reflektierendem Boden. Bei stark bis durchschnittlich reflektierendem Boden liefert der Regen aufgrund seines geringen Rückstreuquerschnitts nur einen vergleichsweise geringen Signalanteil und die Pegelsituation entspricht weitgehend der in FIG. 2 dargestellten.

Bei Regen und sehr schwach reflektierendem Boden liegt zum einen der Pegel des Bodenechos nur noch in der Größenordnung des Regenclutterpegels, zum anderen wird bei sehr schwach reflektierendem Boden unter Umständen das antennennächste Bodenecho nicht erkannt und ein weiter über Boresight liegendes Bodenecho aufgenommen, wodurch auch im Differenzkanal ein nicht mehr vernachlässigbarer Anteil des Bodenechos auftritt. In diesem Fall könnte durch die zusätzliche Verstärkung die Amplitude D' im Differenzkanal trotz eines vorhandenen Bodenechos größer werden als im Summenkanal (FIG. 4A, 4B).

Dies kann zum einen jedoch im allgemeinen in Kauf genommen werden, da ein derart geringes Reflexionsvermögen des Bodens sehr selten auftreten wird und da die Bodenerkennung in einer der benachbarten Elevationsstellungen des geschwenkten Diagramms für die Funktion der Geländefolgesteuerung ausreicht. Zum andern ist gemäß einer Weiterbildung der Erfindung vorgesehen, daß der Verstärkungsfaktor k variabel vorgebbar ist und automatisch nach Maßgabe der Amplitude im Summenkanal eingestellt wird, wobei für große Amplituden entsprechend starken Bodenechos (siehe FIG. 2) ein größerer Verstärkungsfaktor eingestellt wird als für kleine Amplituden S entsprechend einem eventuellen schwachen Bodenecho (FIG. 4C). Der Verstärkungsfaktor k liegt dann beispielsweise im Bereich zwischen zwei und fünf.

FIG. 5 zeigt den prinzipiellen Aufbau einer Anordnung zur Durchführung des beschriebenen Verfahrens, bei welchem der Summenkanal und der Differenzkanal zum Pegelvergleich an die beiden Eingänge eines Komparators angeschlossen sind. Im Zuge des Differenzkanals liegt vor dem Komparator ein Multiplizierer, der das Differenzsignal D um einen vorgebbaren Faktor k verstärkt. Der Komparator gibt ein auf das Vorliegen eines Bodenechos hinweisendes Signal Z ab, wenn das Summensignal S größer ist als das verstärkte Differenzsignal D'.

Die Anordnung in FIG. 6 unterscheidet sich von der in FIG. 5 gezeigten dadurch, daß Summen- und Differenzsignal S und D logarithmiert werden. Zur Verstärkung des Differenzsignals lgD wird diesem in einem Summierer einfach ein lgk entsprechender Pegel hinzuaddiert.

**Patentansprüche**

1. Verfahren zur Unterdrückung von Regenechos bei einem Geländefolgeradar mit einer Elevations-Monopuls-Radareinrichtung mit einem Summenkanal und einem Differenzkanal, wobei nur Echos über Antennen-Boresight berücksichtigt und über einen schmalen Entfernungsbereich integriert werden, dadurch gekennzeichnet, daß die Signalamplitude (D) des Differenzkanals um einen vorgegebenen Faktor (k) verstärkt und mit der Signalamplitude (S) des Summenkanals verglichen wird, und daß für den Fall, daß die verstärkte Signalamplitude (D') im Differenzkanal größer ist als im Summenkanal, das Echo unterdrückt wird.

2. Verfahren nach Anspruch 1, dadurch gekennzeichnet, daß die Signalamplituden in beiden Kanälen logarithmiert werden und die Signalamplitude (lgD) im Differenzkanal um einen vorgegebenen Betrag (lgk) angehoben wird.

3. Verfahren nach Anspruch 1 oder 2, dadurch gekennzeichnet, daß der Faktor (k) bzw. der Betrag (lgk) veränderlich vorgebbar ist und in Abhängigkeit von der Amplitude des Summenkanals automatisch eingestellt wird.

4. Anordnung zur Unterdrückung von Regenechos bei einem Geländefolgeradar mit einer Elevations-Monopuls-Radareinrichtung mit einem Summenkanal und einem Differenzkanal, wobei nur Echos über Antennen-Boresight berücksichtigt und über einen schmalen Entfernungsbereich integriert werden, dadurch gekennzeichnet, daß zum Vergleich der Signalamplituden (S, D) aus dem Summen- und dem Differenzkanal, jeder dieser Kanäle mit einem Eingang eines Komparators (Komp) verbunden ist und daß im Differenzkanal vor dem Komparator (Komp) ein Multiplizierglied zur Erhöhung der Signalamplitude um einen vorgegebenen Faktor angeordnet ist.

5. Anordnung nach Anspruch 4, dadurch gekennzeichnet daß die Signalamplituden in beiden Kanälen in logarithmierter Form vorliegen, und daß im Differenzkanal vor dem Komparator ein Addierglied zur Erhöhung der Signalamplitude angeordnet ist.

## Claims

1. Method for the suppression of rain echoes in a ground-tracking radar with an elevation monopulse radar equipment with a sum channel and a difference channel, wherein only echoes above the aerial bore sight are taken into consideration and integrated over a narrow range of distances, characterised thereby, that the signal amplitude (D) of the difference channel is amplified by a preset factor (k) and compared with the signal amplitude (S) of the sum channel and that the echo is suppressed in the case of the amplified signal amplitude (D') in the difference channel being greater than in the sum channel.

2. Method according to claim 1, characterised thereby, that the signal amplitudes in both channels are made logarithmic and the signal amplitude (lgD) in the difference channel is raised by a preset amount (lgk).

3. Method according to claim 1 or 2, characterised thereby, that the factor (k) or the amount (lgk) is presettable variably and set automatically in dependence on the amplitude of the sum channel.

4. Method for the suppression of rain echoes in a ground-tracking radar with an elevation monopulse radar equipment with a sum channel and a difference channel, wherein only echoes above the aerial bore sight are taken into consideration and integrated over a narrow range of distances, characterised thereby, that for the comparison of the signal amplitudes (S, D) from the sum channel and from the difference channel, each of these channels is connected with an input of a comparator (Komp) and that a multiplying member for increasing the signal amplitude by a preset factor is arranged in the difference channel before the comparator (Komp).

5. Method according to claim 4, characterised thereby, that the signal amplitudes in both channels are present in logarithmic form and that an adding member for increasing the signal amplitude is arranged in the difference channel before the comparator.

## Revendications

1. Méthode pour la suppression des échos de pluie sur un radar de tir en surface équipé d'un dispositif d'élévation monopulse avec voie de somme et voie différentielle, par laquelle seuls les échos sont pris en ligne de compte par les antennes de visée et intégrés à partir d'un faible domaine d'interception,

caractérisée par le fait

que l'amplitude de signal (D) de la voie différentielle est amplifiée d'un facteur (k) et comparée à celle (S) de la voie de somme et que, au cas où cette amplitude amplifiée (D') serait plus grande dans la voie différentielle que celle dans la voie de somme, l'écho sera alors supprimé.

2. Méthode selon la revendication 1.

caractérisée par le fait

que l'on établit une réduction logarithmique des amplitudes de signaux perçues sur les deux voies et que l'amplitude de signal (lgD) de la voie différentielle est augmentée d'une valeur (lgk) donnée.

3. Méthode selon l'une des revendications 1. ou 2.

caractérisée par le fait

que le facteur (k) ou la valeur (lgk) peuvent être variables et sont automatiquement préréglés en fonction de l'amplitude de la voie de somme.

4. Configuration pour la suppression des échos de pluie sur un radar de tir en surface équipé d'un dispositif d'élévation monopulse avec voie de somme et voie différentielle, par laquelle seuls les échos sont pris en ligne de compte par les antennes de visée et intégrés à partir d'un faible domaine d'interception,

caractérisée par le fait

que pour entreprendre la comparaison des amplitudes de signaux (S, D) à partir de la voie de somme et de la voie différentielle, chacune de ces deux voies est reliée à l'entrée d'un comparateur (Komp), un élément multiplicateur destiné à augmenter d'un facteur donné l'amplitude du signal étant disposé sur la voie différentielle en amont de ce comparateur (Komp).

5. Configuration selon la revendication 4.

caractérisée par le fait

que les amplitudes de signaux des deux voies sont disponibles en valeurs logarithmiques et qu'un élément additionneur destiné à augmenter l'amplitude du signal est présent sur la voie différentielle en amont du comparateur.

ABS

dr

ds

B

FIG. 1

k

D $\longrightarrow$ $\otimes$ $\xrightarrow{D'}$ Komp $\xrightarrow{S>D'}$ Z

S

FIG. 5

lg k

D $\longrightarrow$ $\xrightarrow{lg D}$ $\oplus$ $\xrightarrow{lg D'}$ Komp $\xrightarrow{S>D'}$ Z

S $\longrightarrow$

lg S

FIG. 6

A (k=1)          B (k>1)

FIG. 2

FIG. 3

FIG. 4A          FIG. 4B          FIG. 4C